# EUROPÄISCHE PATENTSCHRIFT

(11) **EP 2 133 249 B1**
(45) Veröffentlichungstag und Bekanntmachung des Hinweises auf die Patenterteilung: **14.08.2013**
(21) Anmeldenummer: 09007391.7
(22) Anmeldetag: 04.06.2009
(51) Int. Cl.: B60T 13/66, B60T 13/68, B60T 7/12

(54) **Elektrische Feststellbremse mit Einfallsperre und Verfahren zum Betreiben einer elektrischen Feststellbremse mit Einfallsperre**
Electric hand brake with incursion prevention and method for operating same
Frein de stationnement électrique doté d'un arrêt d'incidence et procédé de fonctionnement d'un frein de stationnement électrique doté d'un arrêt d'incidence

(30) Priorität: 11.06.2008 DE 102008027731
(43) Veröffentlichungstag der Anmeldung: 16.12.2009
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- EP-A1- 1 752 348
- DE-A1- 4 327 759
- DE-A1- 19 942 533
- DE-A1-102005 058 799

## Beschreibung

Die Erfindung betrifft ein Steuergerät zur Steuerung einer Notlöseeinrichtung einer elektrischen Feststellbremse eines Fahrzeugs, wobei die elektrische Feststellbremse und die Notlöseeinrichtung über ein Wechselventil an zumindest einen Federspeicherbremszylinder gekoppelt sind, und die Notlöseeinrichtung ein Notlöseventil und das Steuergerät umfasst. Ein gattungsgemäßes System ist aus der DE 4 327 759 A1 zu entnehmen.

Die Erfindung betrifft weiterhin ein Verfahren zur Steuerung einer Notlöseeinrichtung einer elektrischen Feststellbremse eines Fahrzeugs, wobei die elektrische Feststellbremse und die Notlöseeinrichtung über ein Wechselventil an zumindest einen Federspeicherbremszylinder gekoppelt sind, und die Notlöseeinrichtung ein Notlöseventil und ein Steuergerät umfasst.

In modernen Bremssystemen werden Feststellbremsvorrichtungen eingesetzt, die zur Betätigung einer Feststell- beziehungsweise Parkbremse eines Kraftfahrzeugs dienen. So werden insbesondere zur Steuerung von Drücken in Federspeicherbremszylindern der Feststellbremse so genannte ECPB-Module (ECPB = Electronic Controlled Parking Break) verwendet. Diese ECPB-Module umfassen üblicherweise eine Steuereinrichtung, über die eine Feststellbremsbetätigungseinrichtung und eine Notlöseeinrichtung für die Feststellbremse ansteuerbar sind. Um die Feststellbremse festzustellen oder zu lösen, steuert das zugehörige Steuergerät die Feststellbremseinrichtung an, die entsprechend der Ansteuerung beispielsweise eine Entlüftung der Federspeicherbremszylinder zur Feststellung der Feststellbremse und umgekehrt eine Belüftung der Federspeicherbremszylinder zum Lösen der Feststellbremse vornimmt. Die durch die Feststellbremseinrichtung vorgenommene Belüftung erfolgt üblicherweise durch eine Druckmittelzuführleitung, die beispielsweise mit einer Luftaufbereitungsanlage des Fahrzeugs gekoppelt sein kann. Bei einer derartigen Feststellbremsbetätigungseinrichtung kann der Fall auftreten, dass aufgrund einer Leckage in der Feststellbremsanlage, beispielsweise in Leitungen zu den Federspeicherbremszylindern der Feststellbremse, die Federspeicherbremszylinder während der Fahrt entlüftet werden und so ein unbeabsichtigtes Feststellen der Feststellbremse erfolgt. Dies ist aus Sicherheitsgründen ein gravierender Nachteil, da das unbeabsichtigte Schließen der Feststellbremse das Fahrzeug in einen unkontrollierbaren Zustand versetzen kann.

Der Erfindung liegt die Aufgabe zugrunde, eine elektrische Feststellbremse mit Notlöseeinrichtung bereitzustellen, die sich nicht unbeabsichtigt während der Fahrt schließt.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen Steuergerät dadurch auf, dass das Steuergerät in einer Weise ausgebildet ist, dass die elektrische Feststellbremse über die Notlöseeinrichtung belüftet wird, wenn:
- die Geschwindigkeit des Fahrzeugs größer als ein vorgegebener Wert ist und
- das Einfallen der elektrischen Feststellbremse detektiert wird.

Das Steuergerät zur Steuerung der Notlöseeinrichtung ist somit in der Lage, das Schließen der elektrischen Feststellbremse durch das Belüften der Federspeicherbremszylinder über die Notlöseeinrichtung zu unterbinden, wenn die Geschwindigkeit des Fahrzeugs größer als ein vorgegebener Wert ist. Auf diese Weise kann verhindert werden, dass das Fahrzeug während der Fahrt durch das plötzliche Einfallen der Feststellbremse in einen unkontrollierbaren Zustand versetzt wird.

Hierzu kann nützlicherweise vorgesehen sein, dass das Steuergerät direkt oder indirekt mit einem Raddrehzahlsensor gekoppelt ist. Über den Raddrehzahlsensor kann in einfacher Weise die Geschwindigkeit des Fahrzeugs bestimmt werden. Weiterhin ermöglichen Raddrehzahlsensoren die Detektion einzelner blockierender Räder.

Weiterhin kann vorgesehen sein, dass das Steuergerät direkt oder indirekt mit einem an einem Federspeicherbremszylinder angeordneten Drucksensor gekoppelt ist. Über die Verbindung mit einem solchen Drucksensor kann das Steuergerät das Einfallen der elektrischen Feststellbremse in Form eines Druckabfalles in einem Federspeicherbremszylinder detektieren.

Vorteilhafterweise kann vorgesehen sein, dass das Steuergerät direkt oder indirekt mit weiteren Steuergeräten gekoppelt ist. Das Steuergerät kann auf diese Weise weitere Informationen über den Fahrzeugzustand erhalten. Insbesondere können die weiteren Steuergeräte Statusinformationen über eine eventuell von ihnen initiierte Einbremsung des Fahrzeugs mit Hilfe der Feststellbremse an das Steuergerät übermitteln.

Damit zusammenhängend kann vorgesehen sein, dass das Steuergerät direkt oder indirekt mit einem Drucksensor zum Erfassen eines Druckes einer Betriebsbremse gekoppelt ist. Sinkt der mit dem Drucksensor erfasste Druck einer Betriebsbremse unter den für eine Hilfsbremswirkung notwendigen Druck, kann das Einfallen der Feststellbremse zur Unterstützung einer Einbremsung des Fahrzeugs beabsichtigt sein, um ein sicheres Anhalten des Fahrzeugs zu gewährleisten, wobei das Auslösen der Notlöseeinrichtung der Feststellbremse unerwünscht ist.

Die Erfindung baut auf dem gattungsgemäßen Verfahren dadurch auf, dass die elektrische Feststellbremse über die Notlöseeinrichtung belüftet wird, wenn:
- die Geschwindigkeit des Fahrzeugs größer als ein vorgegebener Wert ist und
- das Einfallen der elektrischen Feststellbremse detektiert wird.

Auf diese Weise werden die Vorteile und Besonderheiten des erfindungsgemäßen Steuergeräts auch im Rahmen eines Verfahrens umgesetzt. Dies gilt auch für die nachfolgend angegebenen besonders bevorzugten Ausführungsformen des erfindungsgemäßen Verfahrens.

Dieses ist in nützlicher Weise dadurch weitergebildet, dass das Einfallen der elektrischen Feststellbremse über Raddrehzahlsensoren detektiert wird.

Vorteilhafterweise kann weiterhin vorgesehen sein, dass das Steuergerät der Notlöseeinrichtung vor dem Betätigen der Notlöseeinrichtung überprüft, ob ein Fahrerwunsch zum Einlegen der elektrischen Feststellbremse vorliegt. Auf diese Weise kann verhindert werden, dass die Notlöseeinrichtung die Feststellbremse löst, obwohl der Fahrer das Einlegen der Feststellbremse wünscht. Dies kann insbesondere in einer Gefahrensituation vorteilhaft sein.

Es ist weiterhin bevorzugt, dass das Steuergerät der Notlöseeinrichtung vor dem Betätigen der Notlöseeinrichtung mit dem Steuergerät verbundene weitere Steuergeräte auf Fehlermeldungen testet. Gibt beispielsweise ein weiteres Steuergerät als Fehlermeldung einen Defekt der Betriebsbremse aus, so ist das Betätigen der Notlöseeinrichtung unerwünscht, da die Bremswirkung der Feststellbremse zum Einbremsen des Fahrzeugs benötigt wird.

In diesem Zusammenhang kann weiterhin vorgesehen sein, dass das Steuergerät der Notlöseeinrichtung vor dem Betätigen der Notlöseeinrichtung testet, ob ein ausreichender Betriebsbremsdruck für eine Hilfsbremswirkung einer Betriebsbremse vorhanden ist.

Die Erfindung wird nun mit Bezug auf die begleitenden Zeichnungen anhand besonders bevorzugter Ausführungsformen beispielhaft erläutert.

### Es zeigen:

- Figur 1: eine vereinfachte Darstellung einer Feststellbremsvorrichtung in einem nur teilweise dargestellten Bremssystem zur Erläuterung der Erfindung;
- Figur 2: eine detaillierte Darstellung der erfindungsgemäßen Feststellbrems-vorrichtung gemäß Figur 1 und
- Figur 3: einen Signalflussplan eines erfindungsgemäßen Verfahrens.

In den nachfolgenden Zeichnungen bezeichnen gleiche Bezugszeichen gleiche oder gleichartige Teile.

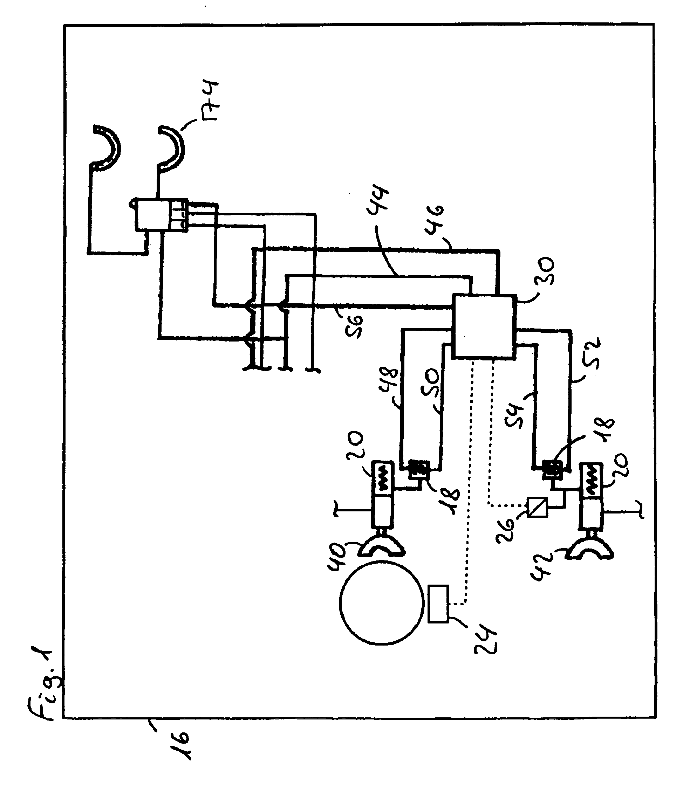

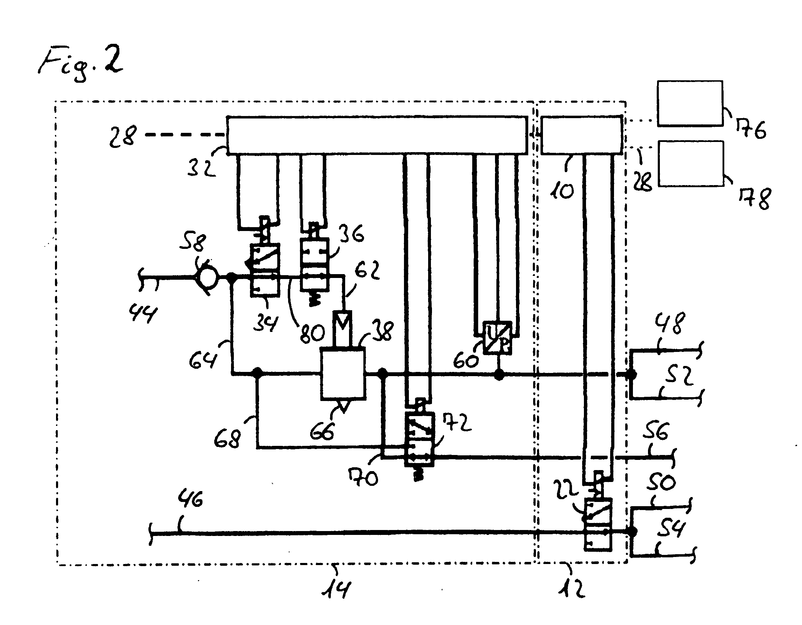

Figur 1 zeigt eine vereinfachte Darstellung der Feststellbremsvorrichtung 30 in einem nur teilweise dargestellten Bremssystem eines Fahrzeugs 16. Weiterhin ist die Feststellbremsvorrichtung 30 in Figur 2 detailliert als elektrische Feststellbremse 14 und Notlöseeinrichtung 12 gezeigt. Die Feststellbremsvorrichtung 30 umfasst unter anderem ein Steuereinrichtung 32 zur Ansteuerung mehrerer Ventileinrichtungen 34, 36 und 38, die zum Lösen und Feststellen einer linken und rechten Feststellbremse 40, 42 des Fahrzeugs 16 dienen. Darüber hinaus umfasst die Feststellbremsvorrichtung 30 ein Steuergerät 10 zur Ansteuerung einer Ventileinrichtung 22, die bei Ausfall der Steuereinrichtung 32 und/oder der Ventileinrichtungen 34, 36 und 38 zum Lösen der linken und rechten Feststellbremse 40, 42 dient. Das Steuergerät 10 und die Steuereinrichtung 32 sind voneinander unabhängig, insbesondere was die Funktionstüchtigkeit des Steuergerätes 10 beim Ausfall der Steuereinrichtung 32 betrifft, und umfassen jeweils dem Fachmann bekannte Komponenten, beispielsweise eine ECU oder einen Controller mit einem Prozessor, einen Speicher etc. Darüber hinaus ist das Steuergerät 10 mit der Steuereinrichtung 32 gekoppelt, um Rückschlüsse über den Zustand der Steuereinrichtung 32 ziehen zu können und damit einen möglichen Ausfall der Steuereinrichtung 32 ermitteln zu können. Es ist auch möglich, das Steuergerät 10 in ein anderes Steuergerät des Fahrzeugs 16 zu integrieren, zum Beispiel in ein ABS/EBS-Steuergerät 76 oder in eine Getriebe- /Kupplungssteuergerät 78.

Die Ventileinrichtung 34 ist als bistabiles 3/2-Wegeventil ausgeführt. Die Ventileinrichtung 36 ist als 2/2-Wegeventil ausgeführt und die Ventileinrichtung 38 ist als Relaisventil 38 mit einer Entlüftungseinrichtung 66 ausgeführt. Das bistabile 3/2-Wegeventil 34 ist mit einem ersten Anschluss über ein Rückschlagventil 58 mit einer ersten Druckmittelzuführleitung 44 des Bremssystems gekoppelt. Die erste Druckmittelzuführleitung 44 kann beispielsweise mit einer nicht dargestellten Druckluftaufbereitungsanlage (EAC-Modul) zur Druckluftbeschaffung gekoppelt sein. Im dargestellten Fall öffnet das Rückschlagventil 58 bei einer Druckmittelströmung in Richtung des bistabilen 3/2-Wegeventils 34 und schließt bei entgegen gesetzter Strömungsrichtung des Druckmittels. Weiterhin ist das bistabile 3/2-Wegenventil 34 mit einem zweiten Anschluss über eine Verbindungsleitung 80 an das 2/2-Wegeventil 36 gekoppelt. In der in Figur 2 dargestellten Schaltstellung des bistabilen 3/2-Wegeventils 34 sind der erste und der zweite Anschluss des bistabilen 3/2-Wegeventils 34 miteinander verbunden. In der nicht dargestellten Schaltstellung des bistabilen 2/3-Wegeventils 34 ist der erste Anschluss geschlossen, wobei der zweite Anschluss des bistabilen 3/2-Wegeventils 34 über den dritten Anschluss mit der Atmosphäre verbunden ist. Das 2/2-Wegeventil 36 verbindet in der dargestellten Schaltstellung dessen ersten Anschluss mit dem zweiten Anschluss. Dem gegenüber sind der erste und der zweite Anschluss des 2/2-Wegeventils 36 in der nicht dargestellten Schaltstellung voneinander getrennt. Der zweite Anschluss des 2/2-Wegeventils 36 ist mit einem Steuereingang 62 eines Relaisventils 38 gekoppelt. Das bistabile 3/2-Wegeventil 34 ist durch die Steuereinrichtung 32 der elektrischen Feststellbremse 14 derart ansteuerbar, dass es bei Vorliegen einer bestimmten Polung der elektrischen Leitungen die dargestellte Schaltstellung einnimmt. Hingegen ist das bistabile 3/2-Wegeventil 34 weiterhin so ansteuerbar, dass es die nicht dargestellte Schaltstellung einnimmt, wenn eine Umpolung der elektrischen Leitungen durch die Steuereinrichtung 32 der elektrischen Feststellbremse 14 vorgenommen wird. Das 2/2-Wegeventil 36 nimmt in einem unbestromten Zustand die dargestellte Schaltstellung und umgekehrt in einem bestromten Zustand die nicht dargestellte Schaltstellung ein. Zwischen dem Rückschlagventil 58 und dem bistabilen 3/2-Wegeventil 34 ist an einer Verzweigungstelle eine Bremsleitung 64 mit der ersten Druckmittelzuführleitung 44 gekoppelt. Die Bremsleitung 64 ist mit einem Anschluss des Relaisventils 38 gekoppelt und setzt sich über einen zweiten Anschluss des Relaisventils 38 hinaus fort. Weiterhin ist an dem Relaisventil 38 die Entlüftung 66 vorgesehen. In Abhängigkeit von dem an dem Steuereingang 62 anliegenden Druck stellt das Relaisventil 38 eine Verbindung zwischen seinen beiden Anschlüssen zur Bremsleitung 64 beziehungsweise zwischen der Bremsleitung 64 und der Entlüftung 66 her. Stromabwärts des Relaisventils 38 verzweigt sich die Bremsleitung 64 schließlich an einer Verzweigungsstelle in Bremsleitungen 48 und 52. Die Bremsleitungen 48 und 52 sind jeweils über ein Wechselventil 18 mit einem linken und rechten Federspeicherbremszylinder 20 der linken und rechten Feststellbremse 40, 42 gekoppelt. Darüber hinaus ist ein Drucksensor 60 zwischen dem Relaisventil 38 und der Verzweigungsstelle zu den Bremsleitungen 48, 52 zur Druckerfassung vorgesehen. Alternativ kann der Drucksensor 60 auch in einer oder beiden Bremsleitungen zwischen dem entsprechenden Wechselventil 18 und dem Federspeicherbremszylinder 20 der jeweiligen Feststellbremse 40, 42 vorgesehen sein. Stromabwärts des Rückschlagventils 58, des abzweigenden Knotens der Leitung 64 und des bistabilen Magnetventils 34 kann optional ein weiteres nicht dargestelltes 3/2-Wegeventil eingebaut sein, welches stromlos mittels einer Feder auf Durchgang geschaltet sein kann, also stromlos Luft an das bistabile Magnetventil 34 durchströmen lässt. Dies hat den Vorteil, dass im Falle einer geforderten stufbaren Feststellbremsung, welche durch Pulsweitenmodulation realisiert wird, das bistabile Magnetventil 34 seitens der Lastzyklenzahl entlastet wird und nicht dauernd geschaltet werden muß.

Das Notlöseventil 22, das durch ein bistabiles 3/2-Wegeventil 22 gebildet wird, ist in einer weiteren beziehungsweise zweiten Druckmittelzuführleitung 46 vorgesehen und wird, wie vorstehend erwähnt, durch das Steuergerät 10 über elektrische Leitungen angesteuert. Die zweite Druckmittelzuführleitung 46 kann dabei ebenso wie die erste Druckmittelzuführleitung 44 mit einer Druckluftaufbereitungsanlage gekoppelt sein. Insbesondere ist die zweite Druckmittelzuführleitung 46 mit einem ersten Anschluss des bistabilen 3/2-Wegeventils 22 gekoppelt, der in der dargestellten Schaltstellung mit dem zweiten Anschluss des bistabilen 3/2-Wegeventils 22 gekoppelt ist. In der nicht dargestellten Schaltstellung ist hingegen der erste Anschluss geschlossen, wohingegen der zweite Anschluss des bistabilen 3/2-Wegeventils 22 über den dritten Anschluss mit der Atmosphäre verbunden ist. Bei Vorliegen einer bestimmten Polung nimmt das bistabile 3/2-Wegeventil 22 die dargestellte Schaltstellung ein. Wird eine entgegengesetzte Polung auf das bistabile 3/2-Wegeventil 22 aufgebracht, so nimmt es die nicht dargestellte Schaltstellung ein. Der zweite Anschluss des bistabilen 3/2-Wegeventils 22 ist über eine Verzweigungsstelle mit Notbremsleitungen 50 und 54 gekoppelt. Die Notbremsleitungen 50 und 54 sind ebenso wie die Bremsleitungen 48 und 52 jeweils über die Wechselventile 18 mit den Federspeicherbremszylindern 20 der linken und rechten Feststellbremse 40, 42 gekoppelt.

Darüber hinaus ist stromaufwärts des Relaisventils 38 eine Anhängerbremstestleitung 68 an einer Verzweigungsstelle mit der Bremsleitung 64 gekoppelt, wobei die Anhängerbremstestleitung 68 mit einem dritten Anschluss eines 3/2-Wegeventils 72 gekoppelt ist. Weiterhin ist stromabwärts des Relaisventils 38 eine Anhängerbremstestleitung 70 an einer Verzweigungsstelle mit der Bremsleitung 64 gekoppelt, wobei die Anhängerbremstestleitung 70 mit einem ersten Anschluss des 3/2-Wegeventils 72 gekoppelt ist. In der dargestellten Schaltstellung des 3/2-Wegeventils 72 ist der erste Anschluss mit dem zweiten Anschluss verbunden, der über eine Anhängerbremstestleitung 56 mit einer in Figur 1 gezeigten Steuerventileinheit einer Anhängerbremse 74 gekoppelt ist. Hingegen ist der dritte Anschluss in der dargestellten Schaltstellung des 3/2-Wegeventils 72 geschlossen. In der nicht dargestellten Schaltstellung ist der erste Anschluss geschlossen, wohingegen der dritte und der zweite Anschluss des 3/2-Wegeventils 72 miteinander verbunden sind. Wie auch die vorstehend genannten Wegeventile 34 und 36 ist auch das 3/2-Wegeventil 72 mit der Steuereinrichtung 32 über elektrische Leitungen gekoppelt. Die Anhängerbremstestleitung 56 und das 3/2-Wegeventil 72 dienen insbesondere dazu, während eines Entlüftungsbetriebs der Feststellbremsen 40, 42 eine Bremswirkung der Anhängerbremse 74 mittels geeigneter Ansteuerung des 3/2-Wegeventils 72 durch die Steuereinrichtung 32 aufzuheben. Dadurch kann überprüft werden, ob die Feststellbremsen 40, 42 auch ohne Bremswirkung der Anhängerbremse 74 ausreichend Bremswirkung für das Fahrzeug 16 mit einem daran gekoppelten Anhänger zur Verfügung stellen können. Die Anhängerbremstestleitung 56 kann optional auch direkt von der Verbindungsleitung 80 versorgt werden. Vorteilhafterweise wird dann der Drucksensor 60 auch von der Verbindungsleitung 80 abzweigen. Die Leitungen 68, 70 sowie das Ventil 72 werden in dieser Ausführung eingespart.

Im Folgenden wird zunächst der normale Löse- und Feststellbetrieb der Feststellbremsen 40, 42 beschrieben. Anschließend wird auf die Einfallsperre der Feststellbremsen 40, 42 eingegangen.

Bei dem normalen Betrieb wird das 3/2-Wegeventil 22 durch das Steuergerät 10 derart angesteuert, dass es seine nicht dargestellte Schaltstellung einnimmt. Dadurch wird eine Druckmittelzufuhr durch die zweite Druckmittelzuführleitung 46 unterbunden. Die Notbremsleitungen 50 und 54 sind daher über das 3/2-Wegeventil 22 mit der Atmosphäre verbunden. Dabei wird eine Entlüftung der Bremsleitungen 48 und 52 durch die Wechselventile 18 unterbunden.

Zum Lösen der Feststellbremsen 40, 42 ist es erforderlich, die Federspeicherbremszylinder 20 der jeweiligen Feststellbremse 40, 42 zu belüften, um deren Bremswirkung aufzuheben. Damit die von der ersten Druckmittelzuführleitung 44 zur Verfügung gestellte Druckluft die Federspeicherbremszylinder 20 der Feststellbremsen 40, 42 erreichen kann, werden das bistabile 3/2-Wegeventil 34 und das 2/2-Wegeventil 36 in die dargestellte Schaltstellung gebracht. Das 2/2-Wegeventil 36 kann zur Einstellung der Druckmittelströmung in dem Steuereingang 62 des Relaisventils 38 phasenmoduliert angesteuert werden. Dadurch verbindet das Relaisventil 38 dessen Anschlüsse entsprechend der Einstellung der Druckmittelströmung in dem Steuereingang 62 mit ansteigenden Druckmittelströmungsdurchsatz miteinander. So wird ein stetiges beziehungsweise kontinuierliches oder gestuftes Abklingen der Bremswirkung der Feststellbremsen 40, 42 bewirkt. Das Druckmittel von der Bremsleitung 64 kann somit durch das Relaisventil 38 zu den Bremsleitungen 48 und 52 strömen. Über die Bremsleitungen 48 und 52 erreicht das Druckmittel die Wechselventile 18 und anschließend die Federspeicherbremszylinder 20 der entsprechenden linken und rechten Feststellbremse 40, 42, wodurch die Bremswirkung der Feststellbremsen 40, 42 auf stetige Weise aufgehoben wird.

Zum Schließen der Feststellbremsen 40, 42 steuert die Steuereinrichtung 32 die Wegeventile 34 und 36 derart an, dass das bistabile 3/2-Wegeventil 34 die nicht dargestellte Schaltstellung einnimmt und das 2/2-Wegeventil 36 die dargestellte Schaltstellung einnimmt. Somit strömt die in dem Steuereingang 62 befindliche Druckluft zurück durch das 2/2-Wegeventil 36 und anschließend über das 3/2-Wegeventil 34 in die Atmosphäre. Dadurch trennt das Relaisventil 38 die Verbindung in der Bremsleitung 64, sorgt jedoch gleichzeitig durch Verbindung der Entlüftungseinrichtung 66 mit dem stromabwärtigen Teil der Bremsleitung 64 für die Entlüftung der Federspeicherbremszylinder 20 der Feststellbremsen 40, 42, wodurch eine Bremswirkung der Feststellbremsen 40, 42 hergestellt wird.

Der Notlösebetrieb des Notlöseventils 22 ist dann erforderlich, wenn die Feststellbremsen 40, 42 entlüftet werden, obwohl die Steuereinrichtung 32 der elektrischen Feststellbremse 14 nicht die Entlüftung der Federspeicherbremszylinder 20 der Feststellbremsen 40, 42 über die Ventileinrichtungen 34, 36 und 38 eingeleitet hat und das Fahrzeug 16 eine gewisse Geschwindigkeit besitzt. Dieser Fall tritt beispielsweise dann auf, wenn während der Fahrt eine Leckage in den Bremsleitungen 64, 48 oder 52 auftritt. Durch die Leckage werden die Feststellbremsen 40, 42 geschlossen, wobei dies in der Regel nicht der Fall sein sollte, wenn die Steuereinrichtung 32 der elektrischen Feststellbremse 14 keine Entlüftung einleitet. Das Steuergerät 10 kann dies beispielsweise über einen Drucksensor 26 detektieren, welcher den Druck in den Federspeicherzylindern 20 misst. Die Fahrzeuggeschwindigkeit kann beispielsweise über einen Raddrehzahlsensor 24 bestimmt werden, der auch eine Verzögerung durch die Feststellbremse 14 detektieren kann. Es ist auch denkbar, dass das Steuergerät 10 einen Anschluss 28 an den CAN-Bus aufweist, über den es die entsprechende Information bezüglich Fahrzeuggeschwindigkeit und Belüftungszustand der Federspeicherbremszylinder 20 bezieht. Eine direkte Verbindung weiterer Steuergeräte, zum Beispiel dem ABS/EBS-Steuergerät 76 mit dem Steuergerät 10 der Notlöseeinrichtung 12 ist möglich. Eine direkte Verbindung bedeutet in diesem Zusammenhang die Verkablung zweier Geräte ohne einen zwischengeschalteten Bus, während eine indirekte Verbindung einer Verbindung über einen zwischengeschalteten Bus, zum Beispiel den CAN-Bus 28 bezeichnet. Liegt eine Leckage der Bremsleitungen 64, 48 oder 52 vor, so steuert das Steuergerät 10 das 3/2-Wegeventil 22 derart an, dass es seine dargestellte Schaltstellung einnimmt und die Feststellbremsen 40, 42 über die Notbremsleitungen 50 und 54 mit der zweiten Druckmittelzuführleitung 46 koppelt. Dadurch werden die jeweiligen Federspeicherbremszylinder 20 wieder belüftet, wodurch die Feststellbremsen 40, 42 unabhängig von der Integrität der Bremsleitungen 64, 48 und 52 belüftet werden können.

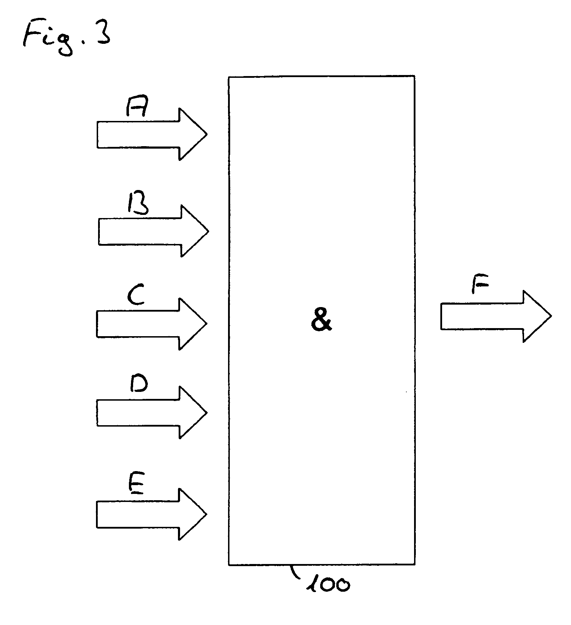

Figur 3 zeigt einen Signalflussplan eines erfindungsgemäßen Verfahrens. Dargestellt ist eine Logikschaltung 100, die üblicherweise in dem Steuergerät 10 integriert ist. Als Eingangsgrößen werden der Logik 100 zugeführt:
- A: Fahrzeuggeschwindigkeit
- B: Fahrerwunsch
- C: Fehlermeldungen
- D: Betriebsbremsdruck
- E: Bremswirkung der Feststellbremse

Die Eingangsgrößen A bis E bilden die Grundlage für eine Entscheidung F, ob die Feststellbremse 14 über die Notlöseeinrichtung 12 belüftet werden soll. Die Fahrzeuggeschwindigkeit A kann beispielsweise über Raddrehzahlsensoren 24 oder von einem nicht dargestellten Tachographen bezogen werden. Der Fahrerwunsch B muss über eine entsprechende Einrichtung zum Betätigen der Feststellbremse 14, zum Beispiel eine Handsteuereinrichtung, detektierbar sein. Fehlermeldungen C von direkt oder indirekt mit dem Steuergerät 10 verbundenen weiteren Steuergeräten 76, 78 können ebenfalls berücksichtigt werden. Weiterhin ist der Bremsdruck der Betriebsbremse D ein wichtiges Kriterium, ob die Notlöseeinrichtung 12 die elektrische Feststellbremse 14 belüften soll. Die Bremswirkung der elektrischen Feststellbremse E wird überwacht, um festzustellen ob das Betätigen der Notlöseeinrichtung 12 überhaupt notwendig sein könnte.

### Bezugszeichenliste

- 10: Steuergerät
- 12: Notlöseeinrichtung
- 14: elektrische Feststellbremse
- 16: Fahrzeug
- 18: Wechselventil
- 20: Federspeicherbremszylinder
- 22: Notlöseventil
- 24: Raddrehzahlsensor
- 26: Drucksensor
- 28: CAN-Bus
- 30: Feststellbremsvorrichtung
- 32: Steuereinrichtung
- 34: 3/2-Wegeventil
- 36: 2/2-Wegeventil
- 38: Relaisventil
- 40: linke Feststellbremse
- 42: rechte Feststellbremse
- 44: erste Druckmittelzuführleitung
- 46: zweite Druckmittelzuführleitung
- 48: Bremsleitung für linke Feststellbremse
- 50: Notbremsleitung für linke Feststellbremse
- 52: Bremsleitung für rechte Feststellbremse
- 54: Notbremsleitung für rechte Feststellbremse
- 56: Anhängerbremstestleitung
- 58: Rückschlagventil
- 60: Drucksensor
- 62: Steuereingang

- 64: Bremsleitung
- 66: Entlüftung
- 68: Anhängerbremstestleitung
- 70: Anhängerbremstestleitung
- 72: 3/2-Wegeventil
- 74: Anhängerbremse
- 76: EBS/ABS-Steuergerät
- 78: Geriebe-/Kupplungssteuergerät
- 80: Verbindungsleitung
- 100: Logik
- A: Fahrzeuggeschwindigkeit
- B: Fahrerwunsch
- C: Fehlermeldungen
- D: Betriebsbremsdruck
- E: Bremswirkung der Feststellbremse
- F: Feststellbremse über Notlöseeinrichtung belüften

## Patentansprüche

1. System umfassend eine elektrische Feststellbremse (14) eines Fahrzeugs (16) und eine Notlöseeinrichtung (12) für die elektrische Feststellbremse (14), wobei die elektrische Feststellbremse (14) und die Notlöseeinrichtung (12) über ein Wechselventil (18) an zumindest einen Federspeicherbremszylinder (20) gekoppelt sind, und die Notlöseeinrichtung (12) ein Notlöseventil (22) und ein Steuergerät (10) zur Steuerung der Notlöseeinrichtung (12) umfasst, **dadurch gekennzeichnet, dass** das Steuergerät (10) in einer Weise ausgebildet ist, dass der Federspeicherbremszylinder (20) über die Notlöseeinrichtung (12) belüftet wird, wenn:
- die Geschwindigkeit des Fahrzeugs (16) größer als ein vorgegebener Wert ist und
- das Einfallen der elektrischen Feststellbremse (14) detektiert wird.

2. System nach Anspruch 1, **dadurch gekennzeichnet, dass** das Steuergerät (10) direkt oder indirekt mit einem Raddrehzahlsensor (24) gekoppelt ist.

3. System nach Anspruch 1 oder 2, **dadurch gekennzeichnet, dass** das Steuergerät (10) direkt oder indirekt mit einem an einem Federspeicherbremszylinder (20) angeordneten Drucksensor (26) gekoppelt ist.

4. System nach einem der vorhergehenden Ansprüche, **dadurch gekennzeichnet, dass** das Steuergerät (10) direkt oder indirekt mit weiteren Steuergeräten (76, 78) des Fahrzeugs (16) gekoppelt ist.

5. System nach einem der vorhergehenden Ansprüche, **dadurch gekennzeichnet, dass** das Steuergerät (10) direkt oder indirekt mit einem Drucksensor zum erfassen eines Druckes einer Betriebsbremse gekoppelt ist.

6. Fahrzeug (16) mit einem System nach einem der vorhergehenden Ansprüche.

7. Verfahren zur Steuerung eines Systems umfassend eine Notlöseeinrichtung (12) und eine elektrische Feststellbremse (14) eines Fahrzeugs (16), wobei die elektrische Feststellbremse (14) und die Notlöseeinrichtung (12) über ein Wechselventil (18) an zumindest einen Federspeicherbremszylinder (20) gekoppelt sind, und die Notlöseeinrichtung (12) ein Notlöseventil (22) und ein Steuergerät (10) umfasst, **dadurch gekennzeichnet, dass** der Federspeicherbremszylinder (20) über die Notlöseeinrichtung (12) belüftet wird, wenn:
- die Geschwindigkeit des Fahrzeugs (16) größer ein vorgegebener Wert ist und
- das Einfallen der elektrischen Feststellbremse (14) detektiert wird.

## Claims

1. System comprising an electric parking brake (14) of a vehicle (16) and an emergency release device (12) for the electric parking brake (14), wherein the electric parking brake (14) and the emergency release device (12) are coupled to at least one spring brake cylinder (20) via a shuttle valve (18) and wherein the emergency release device (12) comprises an emergency release valve (22) and a control unit (10) for controlling the emergency release device (12), **characterised in that** the control unit (10) is designed such that the spring brake cylinder (20) is ventilated via the emergency release device (12) if:
- the speed of the vehicle (16) exceeds a preset value and
- the collapse of the electric parking brake (14) is detected.

2. System according to claim 1, **characterised in that** the control unit (10) is directly or indirectly coupled to a wheel speed sensor (24).

3. System according to claim 1 or 2, **characterised in that** the control unit (10) is directly or indirectly coupled to a pressure sensor (26) located on a spring brake cylinder (20).

4. System according to any of the preceding claims, **characterised in that** the control unit (10) is directly or indirectly coupled to further control units (76, 78) of the vehicle (16).

5. System according to any of the preceding claims, **characterised in that** the control unit (10) is directly or indirectly coupled to a pressure sensor for detecting a pressure of a service brake.

6. Vehicle (16) having a system according to any of the preceding claims.

7. Method for controlling a system comprising an emergency release system (12) and an electric parking brake (14) of a vehicle (16), wherein the electric parking brake (14) and the emergency release system (12) are coupled to at least one spring brake cylinder (20) via a shuttle valve (18) and wherein the emergency release device (12) comprises an emergency release valve (22) and a control unit (10), **characterised in that** the spring brake cylinder (20) is ventilated via the emergency release device (12) if:
- the speed of the vehicle (16) exceeds a preset value and
- the collapse of the electric parking brake (14) is detected.

## Revendications

1. Système comprenant un frein (14) de stationnement électrique d'un véhicule (16) et un dispositif (12) de desserrage d'urgence du frein (14) de stationnement électrique, dans lequel le frein (14) de stationnement électrique et le dispositif (12) de desserrage d'urgence sont couplés par un sélecteur (18) de circuit à au moins un cylindre (20) de frein à ressort accumulateur et le dispositif (12) de desserrage d'urgence comprend une vanne (22) de desserrage d'urgence et un appareil (10) de commande pour la commande du dispositif (12) de desserrage d'urgence, **caractérisé en ce que** l'appareil (10) de commande est constitué de manière à ce que le cylindre (20) de frein à ressort accumulateur soit alimenté en air par le dispositif (12) de desserrage d'urgence, lorsque :
- la vitesse du véhicule (16) est plus grande qu'une valeur prescrite et
- l'intervention du frein (14) du stationnement électronique est détectée.

2. Système suivant la revendication 1, **caractérisé en ce que** l'appareil (10) de commande est couplé directement ou indirectement à un capteur (24) de la vitesse de rotation d'une roue.

3. Système suivant la revendication 1 ou 2, **caractérisé en ce que** l'appareil (10) de commande est couplé directement ou indirectement à un capteur (26) de la pression monté sur un cylindre (20) de frein à ressort accumulateur.

4. Système suivant l'une des revendications précédentes, **caractérisé en ce que** l'appareil (10) de commande est couplé directement ou indirectement à d'autres appareils (76, 78) du véhicule (16).

5. Système suivant l'une des revendications précédentes, **caractérisé en ce que** l'appareil (10) de commande est couplé directement ou indirectement à un capteur de la pression pour détecter une pression d'un frein de service.

6. Véhicule (16) ayant un système suivant l'une des revendications précédentes.

7. Procédé de commande d'un système comprenant un dispositif (12) de desserrage d'urgence et un frein (14) de stationnement électrique d'un véhicule (16), le frein (14) de stationnement électrique et le dispositif (12) de desserrage d'urgence étant couplés par au moins un sélecteur (18) de circuit à au moins un cylindre (20) de frein à ressort accumulateur et le dispositif (12) de desserrage d'urgence comprenant une vanne (22) de desserrage d'urgence et un appareil (10) de commande, **caractérisé en ce que** le cylindre (20) de frein à ressort accumulateur est alimenté en air par le dispositif (12) de desserrage d'urgence lorsque :
- la vitesse du véhicule (16) est plus grande qu'une valeur prescrite et
- l'intervention du frein (14) du stationnement électronique est détectée.
